(19) Europäisches Patentamt
European Patent Office
Office européen des brevets

(11) **EP 1 309 063 B1**

(12) **EUROPÄISCHE PATENTSCHRIFT**

(45) Veröffentlichungstag und Bekanntmachung des Hinweises auf die Patenterteilung:
**21.03.2007 Patentblatt 2007/12**

(51) Int Cl.:
***H02J 3/38*** *(2006.01)*

(21) Anmeldenummer: **01124772.3**

(22) Anmeldetag: **17.10.2001**

(54) **Anlage zur Einspeisung von Strom aus Gleichstromerzeugern in das Wechselstromnetz**

System for feeding power from DC current generators into the AC network

Système pour injecter du courant de générateur de courant continu dans le réseau de courant alternatif

(84) Benannte Vertragsstaaten:
**AT BE CH CY DE DK ES FI FR GB GR IE IT LI LU MC NL PT SE TR**

(43) Veröffentlichungstag der Anmeldung:
**07.05.2003 Patentblatt 2003/19**

(73) Patentinhaber: **Beck, Bernhard**
**97332 Volkach (DE)**

(72) Erfinder: **Beck, Bernhard**
**97332 Volkach (DE)**

(74) Vertreter: **Pöhner, Wilfried Anton, Dr.**
**Patentanwalt**
**Postfach 6323**
**97070 Würzburg (DE)**

(56) Entgegenhaltungen:
**EP-A- 1 047 179**

**Beschreibung**

Die Erfindung bezieht sich auf eine Anlage zur Einspeisung von Strom aus Gleichstromerzeugern in das Wechselstromnetz mit wenigstens zwei aktiven Wechselrichtern, die jeweils durch eine optimale Eingangsleistung gekennzeichnet und jeweils eingangsseitig mit wenigstens einem Gleichstromerzeuger schwankender Ausgangsleistung verbunden sind, und einer Meßvorrichtung, sowie Schaltelemente zur Durchführung eines Umschaltvorgangs vorgesehen sind, und eine Steuervorrichtung zur Auslösung des Umschaltvorgangs vorgesehen ist,
- und die Auslösung des Umschaltvorgangs von der Erfüllung einer Bedingung abhängig ist, welche durch die Steuervorrichtung vorgebbar ist.

Eine Vorrichtung gattungsgemäßer Art ist der EP 1 047 179 entnehmbar, die vorsieht, den Ausgang eines Gleichstromerzeugers bei hinreichend hoher Ausgangsleistung stufenweise auf mehrere Wechselrichter zu verteilen.

Bekannte Photovoltaik-Anlagen bestehen in der Regel aus mehreren Wechselrichtern, die eingangsseitig jeweils mit einem oder mehreren Strängen in Reihe geschalteter Photovoltaikelemente verbunden sind. Wechselrichter und Photovoltaikelemente sind dabei fest verschaltet, so daß keinerlei Schaltungsvarianten während des Betriebes möglich sind.

Bei Anordnungen dieser Art erweist es sich als nachteilig, daß ein Betrieb der Anlage bei der optimalen Eingangsleistung der Wechselrichter nur temporär möglich ist. Dieser Zustand stellt sich mehr oder weniger zufällig ein, wenn die an einen Wechselrichter angeschlossenen Stromerzeuger aufgrund der vorliegenden Sonneneinstrahlung gerade die Ausgangsleistungen liefern, die zum optimalen Betrieb der Wechselrichter erforderlich sind.

Da in unseren Breiten die Sonneneinstrahlung starken Schwankungen unterliegt, sowohl im Laufe eines Tages, als auch witterungs- und jahreszeitlich bedingt, liegt eine Sonneneinstrahlung mit der für den optimalen Einsatz passenden Intensität relativ selten vor. In der übrigen Zeit arbeiten die eingesetzten Wechselrichter im Teillastbetrieb. Im Zeitraum eines Jahres summieren sich diese Zeiten zu dem weitaus größeren Zeitanteil.

Im Teillastbetrieb nehmen die Wirkungsgrade der Wechselrichter deutlich ab und insbesondere im unteren Teillastbetrieb liegen nur schlechte Wirkungsgrade vor. Photovoltaik-Anlagen nach dem Stand der Technik werden daher während der weitaus größten Zeit eines Jahres mit einem unbefriedigenden Wirkungsgrad betrieben. Der schlechte Wirkungsgrad führt dazu, daß bei der Einspeisung der erzeugten Energie in das Wechselstromnetz Verluste auftreten, welche die Rentabilität der Anlage herabsetzen.

Vor diesem Hintergrund hat sich die Erfindung die Aufgabe gestellt, eine Anlage zur Einspeisung von Strom aus Gleichstromerzeugern in das Wechselstromnetz anzugeben, deren Wirkungsgrad deutlich höher als der bekannter Anlagen ist.

Diese Aufgabe wird dadurch gelöst, dass der Umschaltvorgang eine Trennung wenigstens eines Stromerzeugers von einem ersten Wechselrichter und eine Anbindung dieses/dieser Stromerzeuger an einen zweiten Wechselrichter bewirkt,
und dann ausgelöst wird, wenn der zweite Wechselrichter in seiner Eingangsleistung so weit abgefallen ist, dass er nicht mehr im optimalen Wirkungsgradbereich arbeitet.

Die vorgeschlagene Anordnung weist mehrere Wechselrichter auf, an die eingangsseitig jeweils ein oder mehrere Gleichstromerzeuger schwankender Ausgangsleistung angeschlossen sind. Wenn sich die Schwankung der Ausgangsleistung in einer Abnahme der Ausgangsleistung manifestiert, sinkt zwangsläufig die ihr entsprechende Eingangsleistung der Wechselrichter und damit deren Wirkungsgrad. Um dem entgegen zu wirken, wird, nach einem Kerngedanken der Erfindung, die Zahl der an einen aktiven Wechselrichter angeschlossenen Stromerzeuger variabel gehalten. In der Praxis wird diese Vorgabe umgesetzt durch entsprechende Schaltelemente. Diese Elemente ermöglichen, einen oder mehrere der einem Wechselrichter zugeordneten Stromerzeuger von diesem zu trennen und einem anderen Wechselrichter zuzuschalten.

Dabei ist die Auslösung des Umschaltvorgangs vom Eintreffen einer Bedingung abhängig, welche durch die Steuervorrichtung vorgegebbar ist. Eine wesentliche Aussage der Bedingung - wobei im folgenden noch detaillierter hierauf eingegangen wird - ist, daß eine Zuschaltung von Stromerzeugern dann erfolgt, wenn die Eingangsleistung an dem betrachteten Wechselrichter soweit abgefallen ist, daß er nicht mehr im optimalen Wirkungsgradbereich betrieben werden kann. Bei Wechselrichtern ohne angeschlossene Stromerzeuger erfolgt durch die Steuervorrichtung i.d.R. eine Deaktivierung.

Nach einem Merkmal der Erfindung wird der Umschaltvorgang bei allen Wechselrichtern bzw. Stromerzeugern durchgeführt, deren Ein- bzw. Ausgangsleistungen der Bedingung genügen. Dieser Vorgang führt dazu, daß die Zahl der aktiven Wechselrichter innerhalb der Anlage reduziert, die Zahl der an die aktiven Wechselrichter jeweils angeschlossenen Stromerzeuger erhöht wird. Für die jeweils aktiven Wechselrichter bedeutet dies, daß sie jeweils am oder nahe am optimalen Arbeitspunkt betrieben werden. Daraus resultiert für die gesamte Anlage bei der Einspeisung von elektrischer Energie aus Gleichstromerzeugern in das Wechselstromnetz ein Betrieb im optimalen Wirkungsgradbereich. Verluste bei der Einspeisung werden bei Anlagen gemäß vorliegender Erfindung vermieden, die Rentabilität der Anlage wird gegenüber Anlagen nach dem Stand der Technik erhöht. Bei Ausbildung von Photovoltaik-Anlagen gemäß vorliegender Erfindung können diese während des ganzen Jahres mit einem optimalen Wirkungsgrad betrieben werden. Sie dient der Optimierung des Energieeintrags und wird vorzugsweise bei der Wandlung von Gleichstrom aus Photovoltaik-Anlagen mit mehreren Strängen in Reihe geschalteter Photovoltaikelementen eingesetzt. Insbesondere bei größeren Netzeinspeiseanlagen kann die vorgeschlagene Anlage mit Vorteil betrieben werden.

Bei einer Weiterbildung der Erfindung werden bevorzugte Bedingungen angegeben, von deren Eintreffen die Auslösung des Umschaltvorgangs abhängig ist und die in der Steuervorrichtung hinterlegbar sind.

Gemäß vorliegender Erfindung ist eine mögliche Bedingung dann erfüllt, wenn die Meßeinrichtung feststellt, daß die an einem zweiten Wechselrichter anliegende tatsächliche Eingangsleistung auf einen Wert abgefallen ist, der von dessen optimaler Eingangsleistung um einen Betrag niedriger liegt, welcher der Summe der Ausgangsleistungen von n an einen ersten Wechselrichter angeschlossenen Stromerzeugern entspricht, wobei n eine natürliche Zahl ist, deren kleinster Wert gleich 1 und deren Maximalwert gleich der Anzahl aller an dem ersten Wechselrichter angeschlossenen Stromerzeuger ist, und durch die Steuervorrichtung vorgebbar ist.

Von dieser Weiterbildung sind zwei Varianten von besonderem Interesse, die gemäß einem Merkmal der Erfindung dadurch gegeben sind, daß n gleich 1 oder n gleich der Anzahl aller an dem ersten Wechselrichter angeschlossenen Stromerzeuger ist. Beide Varianten werden im folgenden näher ausgeführt. Als Variante eins gilt dabei die Weiterbildung, bei der n gleich der Anzahl aller an einem ersten Wechselrichter angeschlossenen Stromerzeuger entspricht; Variante zwei ist die Weiterbildung mit n gleich 1. Inhaltlich bedeuten diese Vorgaben, bei Variante eins werden alle an einem Wechselrichter angeschlossenen Stromerzeuger einem anderen Wechselrichter zugeschaltet, bei Variante zwei dagegen nur einer der Stromerzeuger.

Der in beiden Varianten formulierte Sachverhalt läßt sich am einfachsten veranschaulichen, wenn man von einer Ausführungsform einer Anlage ausgeht, bei der, gemäß einem weiteren Merkmal der Erfindung, jeder Wechselrichter eingangsseitig mit einem Stromerzeuger verbunden ist und die Wechselrichter und die Stromerzeuger jeweils einander gleich sind.

Für den Ausgangszustand dieser Anlage wird angenommen, daß alle Stromerzeuger eine Ausgangsleistung aufweisen, welche der optimalen Eingangsleistung der Wechselrichter entspricht. Bei sinkender Ausgangsleistung verringern sich die Ausgangsleistungen an allen Stromerzeugern und die ihnen entsprechenden Eingangsleistungen an den Wechselrichtern stetig. Wenn die Eingangsleistung an allen Wechselrichtern auf 50 % der optimalen Eingangsleistung abgefallen ist, ist o.g. Bedingung zur Umschaltung erfüllt.

Die durch Variante eins und Variante zwei definierten Bedingungen sind im vorliegenden Fall identisch, da die Anzahl n der an einem Wechselrichter angeschlossenen Stromerzeuger gleich 1 ist und 1 auch der Maximalzahl der angeschlossenen Stromerzeuger entspricht. Die in Variante eins (oder zwei) formulierte Bedingung ist dann wie folgt erfüllt:

- die tatsächliche Eingangsleistung an einem zweiten Wechselrichter ist auf 50 % der optimalen Eingangsleistung abgefallen
- die Ausgangsleistung in Höhe von 50 % des an einem ersten Wechselrichter angeschlossenen Stromerzeugers entspricht dem Leistungsabfall am zweiten Wechselrichter.

Nach dem Eintreten dieser Bedingung wird erfindungsgemäß eine Trennung der n (=1) Stromerzeuger von einem ersten Wechselrichter und eine Anbindung dieser n (=1) Stromerzeuger an einem zweiten Wechselrichter vorgenommen. Gemäß einem weiteren Merkmal der Erfindung wird dieser Umschaltvorgang bei alle Wechselrichtern bzw. Stromerzeugern durchgeführt, deren Ein- bzw. Ausgangsleistungen der Bedingung genügen. Für das betrachtete Beispiel bedeutet dies im Ergebnis, daß die Stromerzeuger von der einen Hälfte der Wechselrichter getrennt und jeweils den restlichen Wechselrichtern zugeschaltet werden. Die Wechselrichter ohne Stromerzeuger werden anschließend deaktiviert. Die Zahl der aktiven Wechselrichter wird damit auf die Hälfte reduziert, während die Zahl der an jedem aktiven Wechselrichter angeschlossenen Stromerzeuger sich auf das Doppelte erhöht. Hierdurch wird bei den aktiven Wechselrichtern die Eingangsleistung wieder auf die optimale Eingangsleistung angehoben, der Betrieb der Wechselrichter erfolgt daher im optimalen Wirkungsgradbereich. Dementsprechend erreicht der Gesamtwirkungsgrad der Anlage wieder sein Maximum.

Der Vorgang wiederholt sich in gleicher Weise unter den aktiven Wechselrichtern, wenn die Ausgangsleistung der Stromerzeuger weiter sinkt. Der einzige Unterschied hierbei ist, daß der Ausgangszustand der Anlage durch Wechselrichter mit jeweils bereits zwei angeschlossenen Stromerzeugern gegeben ist. Die beiden o.g. Varianten der Weiterbildung führen hierbei zu unterschiedlichen Ergebnissen.

Liegt Variante eins vor, ist die Zahl n durch 2 gegeben, der Maximalzahl der angeschlossenen Stromerzeuger. Dies bedeutet, daß von den jeweils "ersten" Wechselrichtern mit jeweils zwei angeschlossenen Stromerzeugern zwei Stromerzeuger (n=2) abgetrennt und einem "zweiten" Wechselrichter mit zwei angeschlossenen Stromerzeugern zugeschaltet werden.

Der Schaltvorgang erfolgt dann, wenn die Eingangsleistung an allen Wechselrichter auf 50 % der optimalen Eingangsleistung abgefallen ist. Denn nach dem Merkmal von Variante eins gilt dann:

- die Eingangsleistung an einem zweiten Wechselrichter ist auf 50 % der optimalen Eingangsleistung abgefallen
- die Summe der Ausgangsleistungen in Höhe von 50 % der beiden an einem ersten Wechselrichter angeschlossenen Stromerzeuger entspricht dem Leistungsabfall am zweiten Wechselrichter; die Ausgangsleistung der einzelnen Stromerzeuger ist hierbei auf 25 % zurückgegangen.

Nach dem Eintreten dieser Bedingung werden erfindungsgemäß beide Stromerzeuger von einem ersten auf einen zweiten Wechselrichter umgeschaltet. Durch Wiederholung dieses Vorgangs für alle aktiven Wechselrichter wird die Anzahl der aktiven Wechselrichter gegenüber der Ausgangssituation auf ein Viertel reduziert, die Zahl der an jedem aktiven Wechselrichtern angeschlossenen Stromerzeuger auf das Vierfache erhöht.

Wenn man die aufeinander folgenden Umschaltvorgänge an einem aktiven Wechselrichter betrachtet und mit $P_0$ dessen optimale Eingangsleistung, mit P die tatsächliche Eingangsleistung bezeichnet, kann P jeweils folgenden Werte annehmen:

$$\text{bei Anschluß von 1 Stromerzeuger:} \qquad P_0 / 2 \, \Pi \, P \, P \, P_0$$

$$\text{bei Anschluß von 2 Stromerzeugern:} \qquad P_0 / 2 \, \Pi \, P \, P \, P_0 \qquad (1)$$

$$\text{bei Anschluß von 3 Stromerzeugern:} \qquad P_0 / 2 \, \Pi \, P \, P \, P_0,$$

wobei jeder einzelne Stromerzeuger einen Beitrag p zur tatsächlichen Eingangsleistung P beisteuert:

$$\text{bei Anschluß von 1 Stromerzeuger:} \qquad P_0 / 2 \, \Pi \, p \, P \, P_0$$

$$\text{bei Anschluß von 2 Stromerzeugern:} \qquad P_0 / 4 \, \Pi \, p \, P \, P_0 / 2$$

$$\text{bei Anschluß von 4 Stromerzeugern:} \qquad P_0 / 8 \, \Pi \, p \, P \, P_0 / 4.$$

Aus den Gleichungen (1) kann man entnehmen, daß die Eingangsleistung an einem Wechselrichter, unabhängig davon wie viele Umschaltvorgänge stattgefunden haben und dementsprechend wie viele Stromerzeuger an ihm angeschlossen wurden, stets auf 50 % abfällt, bevor durch einen neuen Umschaltvorgang die Eingangsleistung wieder auf die optimale Leistung angehoben wird. Dieser Abfall führt zwar relativ weit weg von der optimalen Eingangsleistung, dennoch sind die Wechselrichter in diesem Leistungsbereich mit einem akzeptablen Wirkungsgrad zu betreiben. Der über längere Zeiträume erreichbare hohe Wirkungsgrad der gesamten Anlage bleibt daher unberührt. Der Vorteil der vorliegenden Variante ist auch in einem sehr einfachen Aufbau der Steuervorrichtung zu sehen.

Liegt Variante zwei vor, ergibt sich mit zwei Stromerzeugern an einem Wechselrichter ein anderer Ablauf. Die Bedingung zur Durchführung des Schaltvorgangs liegt vor, wenn die Eingangsleistung an allen Wechselrichtern auf 66,6 % der optimalen Eingangsleistung abgefallen ist. Denn nach der in Variante zwei formulierten Bedingung gilt dann:

- die Eingangsleistung an einem zweiten Wechselrichter ist auf 66,6 % der optimalen Eingangsleistung abgefallen
- die Ausgangsleistung in Höhe von 33,3 % einer der beiden an einem ersten Wechselrichter angeschlossenen Stromerzeuger entspricht dem Leistungsabfall am zweiten Wechselrichter.

Nach dem Eintreten dieser Bedingung wird erfindungsgemäß einer der beiden Stromerzeuger vom einem ersten auf einen zweiten Wechselrichter umgeschaltet, welcher dann wieder mit optimaler Leistung betrieben werden kann. Der vom ersten Wechselrichter nicht freigeschaltete Stromerzeuger steht zur Umschaltung an andere Wechselrichter zur Verfügung.

Wenn man die aufeinander folgenden Umschaltvorgänge betrachtet, gelten mit den gleichen Bezeichnungen wie oben, für die tatsächliche Eingangsleistung P jeweils folgenden Werte.

bei Anschluß von 1 Stromerzeuger: $\qquad P_0 / 2 \quad \Pi\ P\ P\ P_0$

bei Anschluß von 2 Stromerzeugern: $\qquad 2/3\Delta\ P_0\ \Pi\ P\ P\ P_0 \qquad (2)$

bei Anschluß von 3 Stromerzeugern: $\qquad 3/4\Delta\ P_0\ \Pi\ P\ P\ P_0,$

wobei jeder einzelne Stromerzeuger einen Beitrag p zur tatsächlichen Eingangsleitung P beisteuert:

bei Anschluß von 1 Stromerzeuger: $\qquad P_0 / 2\ \Pi\ p\ P\ P_0$

bei Anschluß von 2 Stromerzeugern: $\qquad P_0 / 3\ \Pi\ p\ P\ P_0 / 2$

bei Anschluß von 3 Stromerzeugern: $\qquad P_0 / 4\ \Pi\ p\ P\ P_0 / 3$

bei Anschluß von 4 Stromerzeugern: $\qquad P_0 / 5\ .\Pi\ p\ P\ P_0 / 4.$

Wie man aus den Gleichungen (2) entnehmen kann, folgt als Vorteil der zweiten Variante gegenüber der ersten, daß die Eingangsleistung an einem Wechselrichter, mit jedem weiteren Umschaltvorgang zunehmend weniger von der optimalen Leistung abfällt. Die Wechselrichter und damit die gesamte Anlage werden daher in der Zeit zwischen zwei Umschaltvorgängen näher am optimalen Wirkungsgrad betrieben. Gegenüber der Variante eins ist damit eine nochmalige Verbesserung des Gesamtwirkungsgrades der Anlage verbunden.

Mit sinkender Ausgangsleistung der Stromerzeuger wird die Anzahl der in der gesamten Anlage genutzten Wechselrichter stetig reduziert. Das dargelegte Schema kann so oft stattfinden, bis alle Stromerzeuger an einem Wechselrichter angeschlossenen sind.

Wenn die Ausgangsleistungen der Gleichstromerzeuger nach einer Abnahme wieder zunehmen, werden gemäß einer Ausgestaltung der Erfindung die bei abnehmenden Ausgangsleistungen durchgeführten Umschaltvorgänge durch die Steuervorrichtung in umgekehrter Reihenfolge wieder rückgängig gemacht.

Von Vorteil für die Wandlung des Gleichstroms mit Wechselrichtern ist es, wenn die Eingangsseiten der aktiven Wechselrichter galvanisch von einander getrennt sind. Bei einer Ausführungsform der Steuervorrichtung der erfindungsgemäßen Anlage sind daher Schalter vorgesehen, welche diese Anforderung umsetzen.

Weitere Vorteile, Einzelheiten und Merkmale der Erfindung lassen sich dem nachfolgenden Teil der Beschreibung entnehmen. In diesem Teil wird ein Ausführungsbeispiel der erfindungsgemäßen Anlage mit Photovoltaikelementen als Stromerzeuger anhand einer beigefügten Zeichnung näher erläutert. Die Zeichnung zeigt in schematischer Darstellung ein Blockdiagramm der Anlage.

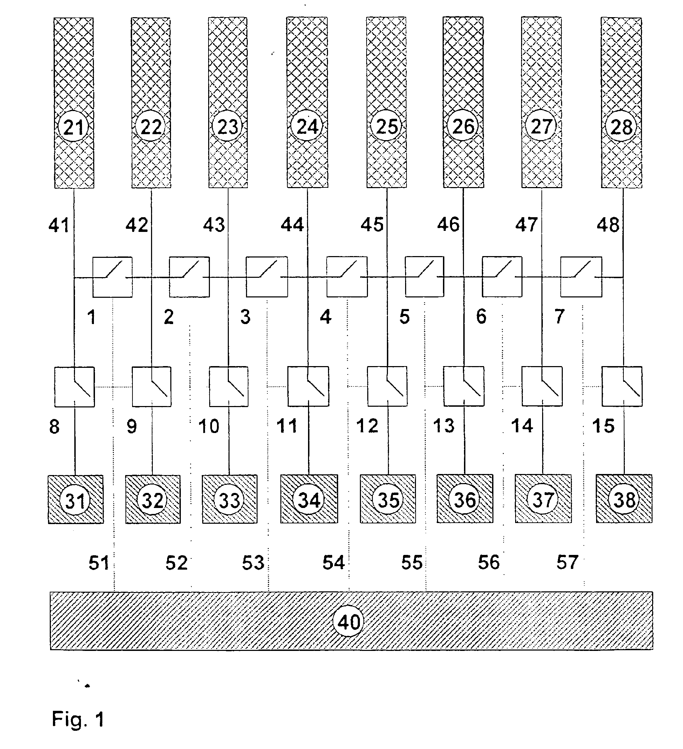

Bei der in Figur 1 dargestellten Anlage ist jeder Wechselrichter eingangsseitig mit einem Stromerzeuger verbunden. Die Wechselrichter und die Stromerzeuger sind jeweils einander gleich ausgeführt. Alle Stromerzeuger weisen eine Ausgangsleistung auf, die der optimalen Eingangsleistung der Wechselrichter entspricht.

Im Mittelfeld der Figur sind die Schaltelement der Anlage wiedergegeben, die aus den Relais 1 - 15 besteht. Die Stromerzeuger 21 -28 bestehen aus Photovoltaikmodulen in Reihe geschalteter Photovoltaikelemente. Mit den Bezugszeichen 31 -38 sind die Wechselrichter gekennzeichnet. Die Meß- und Steuervorrichtung sind ineinander integriert und durch ein einziges Element mit dem Bezugszeichen 40 dargestellt, mit 41 - 48 sind elektrische Leitungen, mit 51 - 57 Steuerleitung gekennzeichnet.

Stellt die Meßvorrichtung bei den Photovoltaikmodulen 21 -28 eine Ausgangsleistung fest, welche kleiner oder gleich der halben optimalen Eingangsleistung der Wechselrichter entspricht, werden durch Öffnen der Relais 9,11,13 und 25 und Schließen der Relais 1, 3, 5 und 7 die Photovoltaikmodule 22, 24, 26 und 28 von den Wechselrichtern 32, 34, 36 und 38 getrennt und mit den Wechselrichtern 31, 33, 35 und 37 verbunden. Dadurch wird die Eingangsleistung an den Wechselrichtern 31, 33, 35 und 37 jeweils verdoppelt und somit wieder auf die optimale Eingangsleistung angehoben. Diese Wechselrichter können folglich wieder im optimalen Wirkungsgradbereich arbeiten und der Gesamtwirkungsgrad der Anlage erreicht wieder sein Maximum. Die Wechselrichter 32, 34, 36 und 38 werden anschließend abgeschaltet.

Bei weiterem Absinken der Ausgangsleistung der Photovoltaikmodule werden nach dem gleichen Schema unter den aktiven Wechselrichtern 31, 33, 35 und 37 die Wechselrichter 33 und 37 abgeschaltet, um bei den verbleibenden aktiven Wechselrichtern 31 und 35 ein Arbeiten im optimalen Wirkungsgradbereich sicher zu stellen.

Die Relaisschaltung des wiedergegebenen Ausführungsbeispiels stellt zudem sicher, daß auf der Gleichspannungsseite die aktiven Wechselrichter galvanisch voneinander getrennt sind.

Die dargestellten Schritte bewirken eine Optimierung in dem Sinn, daß die jeweils aktiven Wechselrichter jeweils am oder nahe am optimalen Arbeitspunkt betrieben werden. Daraus resultiert für die gesamte Anlage bei der Einspeisung von elektrischer Energie aus Gleichstromerzeugern in das Wechselstromnetz ein Betrieb im optimalen Wirkungsgradbereich. Bei Ausbildung von Photovoltaik-Anlagen gemäß vorliegender Erfindung können diese daher während des ganzen Jahres mit einem optimalen Wirkungsgrad betrieben werden.

**Patentansprüche**

1. Anlage zur Einspeisung von Strom aus Gleichstromerzeugern (21-28) in das Wechselstromnetz mit wenigstens zwei aktiven Wechselrichtern (31-38), die jeweils durch eine optimale Eingangsleistung **gekennzeichnet** und jeweils eingangsseitig mit wenigstens einem Gleichstromerzeuger (21-28) schwankender Ausgangsleistung verbunden sind, und einer Meßvorrichtung (40) sowie Schaltelemente (1-15) zur Durchführung eines Umschaltvorgangs vorgesehen sind, und eine Steuervorrichtung (40) zur Auslösung des Umschaltvorgangs vorgesehen ist, und die Auslösung des Umschaltvorgangs von der Erfüllung einer Bedingung abhängig ist, welche durch die Steuervorrichtung vorgebbar ist,
**dadurch gekennzeichnet, dass**
der Umschaltvorgang eine Trennung wenigstens eines Stromerzeugers (21) von einem ersten Wechselrichter (31) und eine Anbindung dieses/dieser Stromerzeuger (21) an einen zweiten Wechselrichter (32) bewirkt, und dann ausgelöst wird, wenn der zweite Wechselrichter (32) in seiner Eingangsleistung so weit abgefallen ist, dass er nicht mehr im optimalen Wirkungsgradbereich arbeitet.

2. Anlage zur Einspeisung von Strom nach Anspruch 1, **dadurch gekennzeichnet, dass** die Bedingung erfüllt ist, wenn die Meßeinrichtung feststellt, daß die an einem zweiten Wechselrichter anliegende tatsächliche Eingangsleistung auf einen Wert abgefallen ist, der von dessen optimaler Eingangsleistung um einen Betrag niedriger liegt, welcher der Summe der Ausgangsleistungen von n an einen ersten Wechselrichter angeschlossenen Stromerzeugern entspricht, wobei n eine natürliche Zahl ist, deren kleinster Wert gleich 1 und deren Maximalwert gleich der Anzahl aller an dem ersten Wechselrichter angeschlossenen Stromerzeuger ist, und durch die Steuervorrichtung vorgebbar ist.

3. Anlage zur Einspeisung von Strom nach Anspruch 2, **dadurch gekennzeichnet, dass** der Umschaltvorgang eine Trennung von n Stromerzeugern von einem ersten Wechselrichter und eine Anbindung dieser n Stromerzeuger an einen zweiten Wechselrichter bewirkt.

4. Anlage zur Einspeisung von Strom nach Anspruch 2 oder 3, **dadurch gekennzeichnet, dass** n gleich 1 oder gleich der Anzahl aller an dem ersten Wechselrichter angeschlossenen Stromerzeuger ist.

5. Anlage zur Einspeisung von Strom nach einem der Ansprüche 1 - 4, **dadurch gekennzeichnet, dass** der Umschaltvorgang für alle Wechselrichter bzw. Stromerzeuger vorgesehen ist, deren Ein- bzw. Ausgangsleistungen der Bedingung genügen.

6. Anlage zur Einspeisung von Strom nach einem der Ansprüche 1 - 5, **dadurch gekennzeichnet, dass** jeder Wechselrichter eingangsseitig mit einem Stromerzeuger verbunden ist, und die Wechselrichter und die Stromerzeuger jeweils einander baugleich sind.

7. Anlage zur Einspeisung von Strom nach einem der Ansprüche 1 - 6, **dadurch gekennzeichnet, dass** die Steuervorrichtung die bei abnehmenden Ausgangsleistungen der Gleichstromerzeuger durchgeführten Umschaltvorgänge bei zunehmenden Ausgangsleistungen der Gleichstromerzeuger in umgekehrter Reihenfolge rückgängig macht.

8. Anlage zur Einspeisung von Strom nach einem der vorangehenden Ansprüche, **dadurch gekennzeichnet, dass** die Steuervorrichtung Schalter aufweist, durch welche die Eingangseiten der aktiven Wechselrichter galvanisch von einander trennbar sind.

9. Verwendung der Anlage zur Einspeisung von Strom nach einem der vorangehenden Ansprüche, **dadurch gekenn-**

**zeichnet, dass** sie bei der Herstellung und Wandlung von Strom mit Photovoltaik-Elementen eingesetzt wird.

**Claims**

1.  System for feeding current from direct current generators (21-28) into the alternating current network, having at least two active inverters (31-38), which are in each case **characterised by** optimum input performance and in each case are connected at their input side to at least one direct current generator (21-28) of fluctuating output power, and a measurement device (40), and switching devices for carrying out a switchover operation, and a control device (40) is provided for initiating the switchover operation, and the initiation of the switchover operating is dependent on a condition being fulfilled, which can be specified via the control device, **characterised in that** the switchover operation effects a disconnection of at least one current generator (21) from a first inverter (31) and a connection of the latter current generator(s) (21) to a second inverter (32), and is then initiated when the second inverter (32) operating in the optimum efficiency range.

2.  System for feeding current according to claim 1, **characterised in that** the condition is satisfied when the measurement device ascertains that the actual input power applied to a second inverter has fallen to a value which is below the optimum input power by an amount which corresponds to the total of the output powers of n current generators connected to a first inverter, n being a natural number whose smallest value is equal to 1 and whose maximum value is equal to the number of all the current generators connected to the first inverter, and n being specifiable by the control device.

3.  System for feeding current according to claim 2, **characterised in that** the switchover operation effects a disconnection of n current generators from a first inverter and a connection of these n current generators to a second inverter.

4.  System for feeding current according to claim 2 or 3, **characterised in that** n is equal to 1 or to the number of all the current generators connected to the first inverter.

5.  System for feeding current according to one of claims 1 to 4, **characterised in that** the switchover operation is carried out for all inverters and current generators whose input and output powers satisfy the condition.

6.  System for feeding current according to one of claims 1 to 5, **characterised in that** each inverter is connected at its input side to a current generator, and the inverters and the current generators are in each case of identical construction to one another.

7.  System for feeding current according to one of claims 1 to 6, **characterised in that**, with increasing output powers of the direct current generators, the control device reverses the switchover operations carried out with decreasing output powers of the direct current generators in the opposite sequence.

8.  System for feeding current according to one of the preceding claims, **characterised in that** the control device has switches, by means of which the input sides of the active inverters can be electrically disconnected from one another.

9.  Use of the system for feeding current according to one of the preceding claims, **characterised in that** the system is used for the production and conversion of current with photovoltaic elements.

**Revendications**

1.  Installation pour l'alimentation en courant électrique provenant de générateurs de courant continu (21 - 28) dans le secteur de courant alternatif avec au moins deux onduleurs actifs (31 - 38), chacun **caractérisé par** une puissance d'entrée optimale et relié du côté de l'entrée avec au moins un générateur de courant continu (21 - 28) de puissance de sortie variable et un dispositif de mesure (40) ainsi que des éléments de contact (1 -15) et un dispositif de commande prévus pour exécuter une opération de commutation dépendant d'une condition pouvant être indiquée au préalable par le dispositif de commande,
    **caractérisée par le fait que**
    l'opération de commutation provoque la séparation d'au moins un générateur (21) d'un premier onduleur (31) et une connexion de ce générateur (21) à un second onduleur (32), et est déclenchée lorsque le second onduleur (32) a vu sa puissance d'entrée tomber si bas qu'il ne travaille plus dans sa zone de degré d'efficacité optimale.

**2.** Installation pour l'alimentation en courant électrique selon la revendication 1, **caractérisée par le fait que** la condition est remplie lorsque le dispositif de mesure constate que la puissance d'entrée est tombée à une valeur inférieure à sa puissance d'entrée optimale d'un montant correspondant à la somme des puissances de sortie de n générateurs raccordés à un premier onduleur, sachant que n est un nombre naturel dont la plus petite valeur est égale à 1 et dont la valeur maximale est égale à la somme de tous les générateurs raccordés à un premier onduleur et peut être prescrite par un dispositif de commande.

**3.** Installation pour l'alimentation en courant électrique selon la revendication 2, **caractérisée par le fait que** l'opération de commutation provoque une séparation de n générateurs d'un premier onduleur et une connexion de ces n générateurs à un second onduleur.

**4.** Installation pour l'alimentation en courant électrique selon la revendication 2 ou 3, **caractérisée par le fait que** n est égal à 1 ou est égal au nombre de tous les générateurs raccordés au premier onduleur.

**5.** Installation pour l'alimentation en courant électrique selon les revendications 1 - 4, **caractérisée par le fait que** l'opération de commutation est prévue pour tous les onduleurs et générateurs dont les puissances d'entrée et de sortie répondent à la condition.

**6.** Installation pour l'alimentation en courant électrique selon une des revendications 1 - 5, **caractérisée par le fait que** chaque onduleur est relié du côté de l'entrée avec un générateur et que les onduleurs et les générateurs sont chacun de construction identique.

**7.** Installation pour l'alimentation en courant électrique selon une des revendications 1 - 6, **caractérisée par le fait que** le dispositif de commande annule dans l'ordre inverse les opérations de commutation exécutées au moment des baisses de puissance en cas d'augmentation des puissances de sortie des générateurs.

**8.** Installation pour l'alimentation en courant électrique selon une des revendications précédentes, **caractérisée par le fait que** le dispositif de commande présente des interrupteurs à l'aide desquels les côtés d'entrée des onduleurs actifs peuvent être isolés galvaniquement les uns des autres.

**9.** Utilisation de l'installation pour l'alimentation en courant électrique selon une des revendications précédentes, **caractérisée par le fait qu'**elle est mise en oeuvre avec des éléments photovoltaïques pour la production et la conversion de courant électrique.

Fig. 1